# EUROPEAN PATENT APPLICATION

(11) **EP 3 402 165 A1**
(43) Date of publication of application: **14.11.2018**
(21) Application number: 17765669.1
(22) Date of filing: 15.02.2017
(51) Int. Cl.: H04L 29/08

(54) **ACCESS RECORD PASSING BACK METHOD, DEVICE AND SYSTEM**

(30) Priority: 14.03.2016 CN 201610143912
(71) Applicant: Huawei Technologies Co., Ltd., Longgang District Shenzhen, Guangdong 518129 (CN)
(72) Inventor: WANG, Yi, Shenzhen Guangdong 518129 (CN); LIN, Dong, Shenzhen Guangdong 518129 (CN); ZHANG, Gong, Shenzhen Guangdong 518129 (CN)
(74) Representative: Epping - Hermann - Fischer
(86) International application number: PCT/CN2017/073674
(87) International publication number: WO 2017/157127

(57) **Abstract**

The present invention provides an access record feedback method, a device, and a system and relates to the field of network communications, to resolve a problem that a user request cannot pass through a network device to reach a content provider in a CCN or NDN network. The access record feedback method includes: processing, by a network device, a data request of a user to generate an access record; and sending, by the network device, the access record to a content provider when the generated access record meets a preset trigger condition. Embodiments of the present invention are applied to a CCN or NDN network.

## Description

This application claims priority to Chinese Patent Application No. 201610143912.3, filed with the Chinese Patent Office on March 14, 2016, and entitled "ACCESS RECORD FEEDBACK METHOD, DEVICE, AND SYSTEM", which is incorporated herein by reference in its entirety.

### TECHNICAL FIELD

The present invention relates to the field of network communications, and in particular, to an access record feedback method, a device, and a system.

### BACKGROUND

In CCN (English name: content centric networking, Chinese name: content centric networking) or NDN (English name: named data networking, Chinese name: named data networking), network transmission efficiency is improved by caching content in a network device, thereby reducing network costs and improving user experience.

However, caching content in a network device brings a side effect: A user request is responded to by a network node that has cached content, and therefore the user request cannot be sent from the network device to a content provider (English name: content provider, CP for short). Consequently, traffic of the content provider decreases, and accordingly revenues of the content provider fall; the content provider cannot assess value of content according to statistical data of user requests; the content provider cannot distribute content better according to the statistical data of user requests; as network caching reduces the revenues of the content provider, the content provider does not uphold development of an efficient network system structure such as CCN or NDN.

### SUMMARY

Embodiments of the present invention provide an access record feedback method, a device, and a system, to resolve a problem that a user request cannot pass through a network device to reach a content provider in a CCN or NDN network.

To achieve the foregoing objectives, the following technical solutions are used in the embodiments of the present invention.

According to a first aspect, an access record feedback method is provided, where the method includes:
processing, by a network device, a data request of a user to generate an access record; and
sending, by the network device, the access record to a content provider when the generated access record meets a preset trigger condition.

According to the access record feedback method provided in the present invention, the network device processes the data request of the user to generate the access record; and the network device sends the access record to the content provider when the generated access record meets the preset trigger condition. The network device does not directly discard a data request packet any more, but processes the data request packet to generate an access record, and sends the access record to the content provider when the preset trigger condition is met. This resolves a problem that a user request cannot pass through a network device to reach a content provider in a CCN or NDN network.

With reference to the first aspect, in a first possible implementation, the processing, by a network device, a data request of a user to generate an access record includes:
storing, by the network device, the original data request to generate the access record; and/or
extracting, by the network device, key information from the data request to generate the access record.

With reference to the first aspect, in a second possible implementation, the preset trigger condition includes one or more of the following:
that a preset time threshold is exceeded, that a preset quantity of data requests is exceeded, or that network content is deleted from the network device.

With reference to the first aspect, in a third possible implementation, the sending, by the network device, the access record to a content provider includes:
encapsulating, by the network device, the access record in a data request packet;
sending the data request packet to the content provider; and
receiving a data response packet sent by the content provider, where the data response packet is used to indicate that the content provider has received the access record.

With reference to the first aspect, in a fourth possible implementation, the sending, by the network device, the access record to a content provider includes:
the network device sends a first data request packet to the content provider, where the first data request packet is used to inform the content provider of an available access record;
receiving a first data response packet sent by the content provider, where the first data response packet is used to indicate that the content provider has received the first data request packet;
receiving a second data request packet sent by the content provider, where the second data response packet is used to indicate that the content provider is requesting the access record; and
encapsulating, in response to the second data request packet, the access record in a second data response packet, and sending the second data response packet to the content provider.

With reference to the first aspect, in a fifth possible implementation, the access record includes:
an access record with respect to one piece of content; or
an access record with respect to one content provider.

According to a second aspect, an access record feedback method is provided, where the method includes:
receiving an access record sent by a network device, where the access record is generated by the network device after the network device processes a data request of a user, and is sent when the access record meets a preset trigger condition.

According to the access record feedback method provided in the present invention, the network device processes the data request of the user to generate the access record; and the network device sends the access record to the content provider when the generated access record meets the preset trigger condition. The network device does not directly discard a data request packet any more, but processes the data request packet to generate an access record, and sends the access record to the content provider when the preset trigger condition is met. This resolves a problem that a user request cannot pass through a network device to reach a content provider in a CCN or NDN network.

With reference to the second aspect, in a first possible implementation, that the access record is generated by the network device after the network device processes a data request of a user includes:
storing, by the network device, the original data request to generate the access record; and/or
extracting, by the network device, key information from the data request to generate the access record.

With reference to the second aspect, in a second possible implementation, the preset trigger condition includes one or more of the following:
that a specified time threshold is exceeded, that a specified quantity of data requests is exceeded, or that network content is deleted from the network device.

With reference to the second aspect, in a third possible implementation, the receiving, by a content provider, an access record sent by a network device includes:
receiving, by the content provider, a data request packet sent by the network device, where the access record is encapsulated in the data request packet; and
sending a data response packet to the network device, where the data response packet is used to indicate that the content provider has received the access record.

With reference to the second aspect, in a fourth possible implementation, the receiving, by a content provider, an access record sent by a network device includes:
receiving, by the content provider, a first data request packet sent by the network device, where the first data request packet informs the content provider of an available access record;
sending a first data response packet to the network device, where the first data response packet is used to indicate that the content provider has received the first data request packet;
sending a second data request packet to the network device, where the second data request packet is used to indicate that the content provider is requesting the access record; and
receiving a second data response packet sent by the network device, where the access record is encapsulated in the second data response packet.

With reference to the second aspect, in a fifth possible implementation, the receiving, by a content provider, an access record sent by a network device includes:
receiving, by the content provider, an access record sent by the network device with respect to one piece of content; or
receiving, by the content provider, an access record sent by the network device with respect to one content provider.

According to a third aspect, a network device is provided, configured to execute the method according to any one of the first aspect or the possible implementations of the first aspect, including:
a processing unit, configured to process a data request of a user to generate an access record; and
a sending unit, configured to send the access record to a content provider when the generated access record meets a preset trigger condition.

The network device in the present invention may be configured to execute the method procedure in the first aspect. Therefore, for technical effects that can be obtained by the network device, reference may be made to the method in the first aspect. Details are not repeated herein in the present invention.

With reference to the third aspect, in a first possible implementation, the processing unit is specifically configured to:
store the original data request to generate the access record; and/or
extract key information from the data request to generate the access record.

With reference to the third aspect, in a second possible implementation, the preset trigger condition includes one or more of the following:
that a preset time threshold is exceeded, that a preset quantity of data requests is exceeded, or that network content is deleted from the network device.

With reference to the third aspect, in a third possible implementation,
the sending unit is further configured to encapsulate the access record in a data request packet;
the sending unit is further configured to send the data request packet to the content provider; and
the network device further includes a receiving unit, configured to receive a data response packet sent by the content provider, where the data response packet is used to indicate that the receiving unit has received the access record.

With reference to the third aspect, in a fourth possible implementation,
the sending unit is further configured to send a first data request packet to the content provider, where the first data request packet is used to inform the content provider of an available access record;
the network device further includes a receiving unit, configured to receive a first data response packet sent by the content provider, where the first data response packet is used to indicate that the receiving unit has received the first data request packet;
the receiving unit is further configured to receive a second data request packet sent by the content provider, where the second data response packet is used to indicate that the network device is requesting the access record; and
the sending unit is further configured to: encapsulate, in response to the second data request packet, the access record in a second data response packet, and send the second data response packet to the content provider.

With reference to the third aspect, in a fifth possible implementation, the access record includes:
an access record with respect to one piece of content; or
an access record with respect to one content provider.

According to a fourth aspect, a content provider is provided, configured to execute the method according to any one of the second aspect or the possible implementations of the second aspect, including:
a receiving unit, configured to receive an access record sent by a network device, where the access record is generated by the network device after the network device processes a data request of a user, and is sent when the access record meets a preset trigger condition.

The content provider in the present invention may be configured to execute the method procedure in the second aspect. Therefore, for technical effects that can be obtained by the content provider, reference may be made to the method in the second aspect. Details are not repeated herein in the present invention.

With reference to the fourth aspect, in a first possible implementation, that the access record is generated by the network device after the network device processes a data request of a user includes:
storing, by the network device, the original data request to generate the access record; and/or
extracting, by the network device, key information from the data request to generate the access record.

With reference to the fourth aspect, in a second possible implementation, the preset trigger condition includes one or more of the following:
that a specified time threshold is exceeded, that a specified quantity of data requests is exceeded, or that network content is deleted from the network device.

With reference to the fourth aspect, in a third possible implementation,
the receiving unit is further configured to receive a data request packet sent by the network device, where the access record is encapsulated in the data request packet; and
the content provider further includes a sending unit, configured to send a data response packet to the network device, where the data response packet is used to indicate that the receiving unit has received the access record.

With reference to the fourth aspect, in a fourth possible implementation,
the receiving unit is further configured to receive a first data request packet sent by the network device, where the first data request packet informs the content provider of an available access record;
the content provider further includes a sending unit, configured to send a first data response packet to the network device, where the first data response packet is used to indicate that the receiving unit has received the first data request packet;
the sending unit is further configured to send a second data request packet to the network device, where the second data request packet is used to indicate that the content provider is requesting the access record; and
the receiving unit is further configured to receive a second data response packet sent by the network device, where the access record is encapsulated in the second data response packet.

With reference to the fourth aspect, in a fifth possible implementation, the receiving unit is further configured to:
receive an access record sent by the network device with respect to one piece of content; or
receive an access record sent by the network device with respect to one content provider.

According to a fifth aspect, a network device is provided, configured to execute the method according to any one of the first aspect or the possible implementations of the first aspect, including a processor, a first interface circuit, a second interface circuit, a memory, and a bus, where the processor, the first interface circuit, the second interface circuit, and the memory are connected and communicate with each other by using the bus; and the processor is configured to execute program code in the memory to control the first interface circuit and the second interface circuit to perform the following operations:
the processor is configured to process a data request of a user to generate an access record; and
the first interface circuit is configured to send the access record to a content provider when the generated access record meets a preset trigger condition.

The network device in the present invention may be configured to execute the method procedure in the first aspect. Therefore, for technical effects that can be obtained by the network device, reference may be made to the method in the first aspect. Details are not repeated herein in the present invention.

With reference to the fifth aspect, in a first possible implementation, the processor is specifically configured to:
store the original data request to generate the access record; and/or
extract key information from the data request to generate the access record.

With reference to the fifth aspect, in a second possible implementation, the preset trigger condition includes one or more of the following:
that a preset time threshold is exceeded, that a preset quantity of data requests is exceeded, or that network content is deleted from the network device.

With reference to the fifth aspect, in a third possible implementation,
the first interface circuit is further configured to encapsulate the access record in a data request packet;
the first interface circuit is further configured to send the data request packet to the content provider; and
the second interface circuit is configured to receive a data response packet sent by the content provider, where the data response packet is used to indicate that the first interface circuit has received the access record.

With reference to the fifth aspect, in a fourth possible implementation,
the first interface circuit is further configured to send a first data request packet to the content provider, where the first data request packet is used to inform the content provider of an available access record;
the second interface circuit is configured to receive a first data response packet sent by the content provider, where the first data response packet is used to indicate that the second interface circuit has received the first data request packet;
the second interface circuit is further configured to receive a second data request packet sent by the content provider, where the second data response packet is used to indicate that the network device is requesting the access record; and
the first interface circuit is further configured to: encapsulate, in response to the second data request packet, the access record in a second data response packet, and send the second data response packet to the content provider.

With reference to the fifth aspect, in a fifth possible implementation, the access record includes:
an access record with respect to one piece of content; or
an access record with respect to one content provider.

According to a sixth aspect, a content provider is provided, configured to execute the method according to any one of the second aspect or the possible implementations of the second aspect, including a processor, a first interface circuit, a second interface circuit, a memory, and a bus, where the processor, the first interface circuit, the second interface circuit, and the memory are connected and communicate with each other by using the bus; and the processor is configured to execute program code in the memory to control the first interface circuit and the second interface circuit to perform the following operations:
the first interface circuit is configured to receive an access record sent by a network device, where the access record is generated by the network device after the network device processes a data request of a user, and is sent when the access record meets a preset trigger condition.

The content provider in the present invention may be configured to execute the method procedure in the second aspect. Therefore, for technical effects that can be obtained by the content provider, reference may be made to the method in the second aspect. Details are not repeated herein in the present invention.

With reference to the sixth aspect, in a first possible implementation, that the access record is generated by the network device after the network device processes a data request of a user includes:
storing, by the network device, the original data request to generate the access record; and/or
extracting, by the network device, key information from the data request to generate the access record.

With reference to the sixth aspect, in a second possible implementation, the preset trigger condition includes one or more of the following:
that a specified time threshold is exceeded, that a specified quantity of data requests is exceeded, or that network content is deleted from the network device.

With reference to the sixth aspect, in a third possible implementation,
the first interface circuit is further configured to receive a data request packet sent by the network device, where the access record is encapsulated in the data request packet; and
the second interface circuit is configured to send a data response packet to the network device, where the data response packet is used to indicate that the receiving unit has received the access record.

With reference to the sixth aspect, in a fourth possible implementation,
the first interface circuit is further configured to receive a first data request packet sent by the network device, where the first data request packet informs the content provider of an available access record;
the second interface circuit is configured to send a first data response packet to the network device, where the first data response packet is used to indicate that the first interface circuit has received the first data request packet;
the second interface circuit is further configured to send a second data request packet to the network device, where the second data request packet is used to indicate that the content provider is requesting the access record; and
the first interface circuit is further configured to receive a second data response packet sent by the network device, where the access record is encapsulated in the second data response packet.

With reference to the sixth aspect, in a fifth possible implementation, the first interface circuit is further configured to:
receive an access record sent by the network device with respect to one piece of content; or
receive an access record sent by the network device with respect to one content provider.

According to a seventh aspect, an access record feedback system is provided, including the network device according to any one of the third aspect or the possible implementations of the third aspect and the content provider according to any one of the fourth aspect or the possible implementations of the fourth aspect, or
including the network device according to any one of the fifth aspect or the possible implementations of the fifth aspect and the content provider according to any one of the sixth aspect or the possible implementations of the sixth aspect.

The access record feedback system provided in the embodiments of the present invention includes the network device according to any one of the third aspect or the possible implementations of the third aspect and the content provider according to any one of the fourth aspect or the possible implementations of the fourth aspect, or includes the network device according to any one of the fifth aspect or the possible implementations of the fifth aspect and the content provider according to any one of the sixth aspect or the possible implementations of the sixth aspect. Therefore, for technical effects that can be obtained by the access record feedback system, reference may be made to those of the network device and the content provider. Details are not repeated herein.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an access record feedback system according to an embodiment of the present invention;
FIG. 2 is a detailed schematic structural diagram of an access record feedback system according to an embodiment of the present invention;
FIG. 3 is a schematic structural diagram of a data request packet and a data response packet according to an embodiment of the present invention;
FIG. 4 is a schematic structural diagram of a CS, a PIT, and a FIB according to an embodiment of the present invention;
FIG. 5 is a schematic diagram of a forwarding mechanism for a data request packet and a data response packet according to an embodiment of the present invention;
FIG. 6 is a schematic flowchart of an access record feedback method according to an embodiment of the present invention;
FIG. 7 is a schematic flowchart of obtaining content from a content provider and caching the content by a network device according to an embodiment of the present invention;
FIG. 8 is a schematic flowchart of processing a data request of a user by a network device to generate an access record according to an embodiment of the present invention;
FIG. 9 is a schematic flowchart of another access record feedback method according to an embodiment of the present invention;
FIG. 10 is a schematic flowchart of still another access record feedback method according to an embodiment of the present invention;
FIG. 11 is a schematic structural diagram of a network device according to an embodiment of the present invention;
FIG. 12 is a schematic structural diagram of a content provider according to an embodiment of the present invention;
FIG. 13 is a schematic structural diagram of another network device according to an embodiment of the present invention; and
FIG. 14 is a schematic structural diagram of another content provider according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

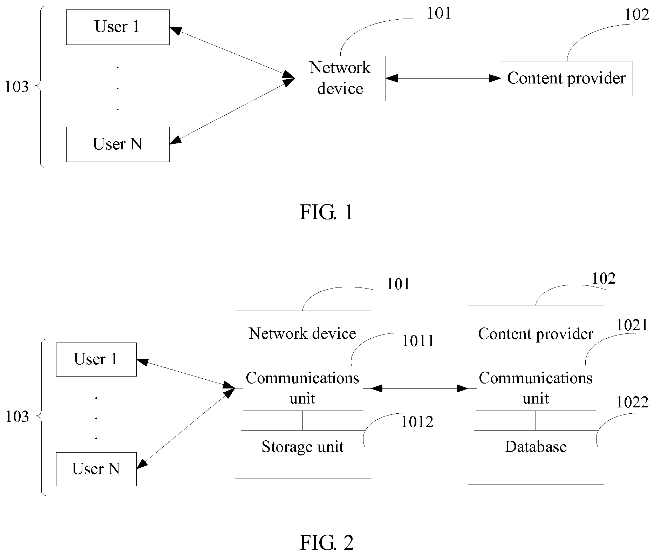

The present invention provides an access record feedback system applied to a CCN or NDN network. Referring to FIG. 1, the access record feedback system includes a network device 101, a content provider 102, and a user 103. The network device 101, the content provider 102, and the user 103 are connected by a network. The network may be the Internet or a local area network.

The content provider 102 is responsible for providing content for user access. The network device is located between the user 103 and the content provider 102, and is configured to: receive an access request of the user 103, forward the access request to the content provider 102 to request content from the content provider 102, and cache the content for later access by another user.

Specifically, referring to FIG. 2, the network device 101 includes a communications unit 1011 and a storage unit 1012, and the content provider 102 includes a communications unit 1021 and a database 1022. The database 1022 of the content provider 102 stores content for access by the user 103. The communications unit 1021 of the content provider 102 is connected by a network to the communications unit 1011 of the network device 101, for transmission of a data request packet and a data response packet. When the user 103 accesses the content of the content provider 102 for a first time via the network device 101, the network device 101 communicates with the communications unit 1021 of the content provider 102 by using the communications unit 1011, to obtain content stored in the database 1022, and stores the content in the storage unit 1012 of the network device 101 for later access by another user. When the user 103 requests the content of the content provider 102 later via the network device 101, because the network device 101 has already stored the content in the storage unit 1012, the network device 101 directly returns the content to the user by using the communications unit 1011, and does not need to request the content from the content provider 102.

The network device in the present invention may be a device with a network forwarding function, such as a router. The user in the present invention may be one or more users.

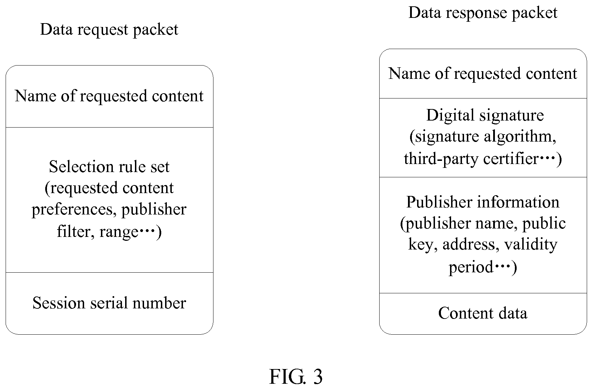

Referring to FIG. 3, in a CCN network, data packets are categorized into two types: data request packets (also referred to as interest packets) and data response packets (also referred to as data packets). The data request packet includes a name of requested content, a selection rule set, and a session serial number. The selection rule set includes requested content preferences, a publisher filter, a range, and the like. The data response packet includes the name of the requested content, a digital signature, publisher information, and content data. The digital signature includes a signature algorithm, a third-party certifier, and the like. The publisher information includes a publisher name, a public key, an address, a validity period, and the like.

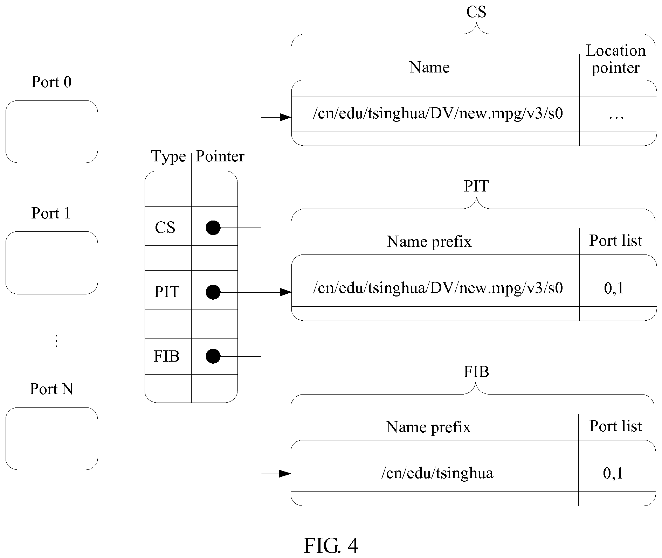

To provide better services, a network device on the CCN network stores three logical structures for maintenance of state information. Referring to FIG. 4, the three logical structures include a CS (English name: content store, Chinese name: content store), a PIT (English name: pending interest table, Chinese name: pending interest table), and a FIB (English name: forwarding information base, Chinese name: forwarding information base).

The CS stores content frequently forwarded by the network device recently, and the content is stored in a <name, data pointer> table format, where "name" is a published name of requested content, and "data pointer" points to a physical memory location at which the content is actually stored. This table may be construed as a content index table on the network device.

The PIT stores state information of special-purpose data request packets that have been forwarded by the network device but to which data responses have not been received yet. The state information is stored in a <name prefix, port list, other attributes> format, where the "name prefix" is a route prefix existing after content name aggregation, and the "port list" records receive ports of data request packets that request same content.

The FIB is similar to a routing and forwarding table in an IP (English name: internet protocol, Chinese name: Internet Protocol) network, and records a list of ports by which a data request packet can be forwarded. In the FIB, information is stored in a <name prefix, port list> format, where the "name prefix" is an after-aggregation route prefix, and the "port list" indicates ports by which a data request packet can be forwarded, to help obtain content corresponding to a specified name.

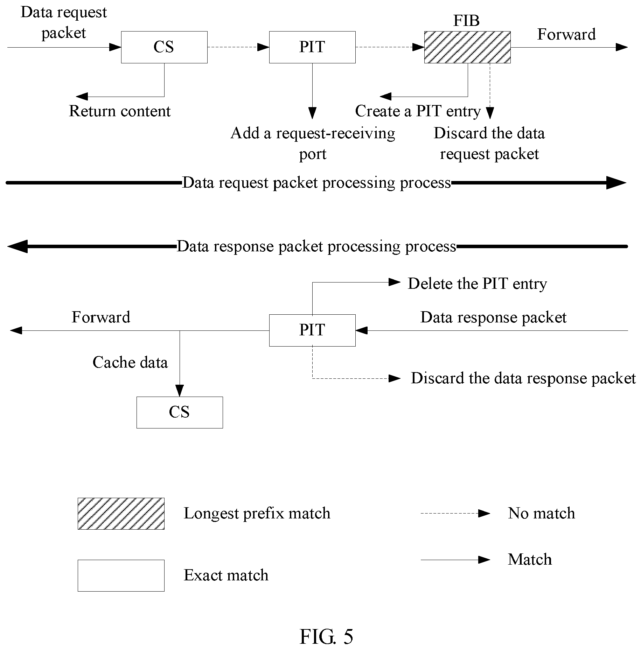

In the NDN network, different forwarding mechanisms are implemented for a data request packet and a data response packet, as shown in FIG. 5.

When receiving a data request packet, a network device first searches a CS by using a requested content name in the data request packet as a key word, and if content corresponding to the name exists, directly returns the corresponding content to a user that sends the request. If the content does not exist in a cache, a PIT table is searched. If a corresponding entry is found, it is indicated that a data request packet that requests the same content has been forwarded but a corresponding data response packet has not been received yet. Therefore, a number of a port that receives the data request packet is added to the corresponding port list entry of the PIT table, and the data request packet is discarded without being forwarded. If no corresponding entry is found, it is required that the name be added to a name entry of the PIT table, that a number of a port that receives the data request packet be recorded in a corresponding port list entry, and that route search be performed in a FIB. When there are a plurality of ports that can forward the data request packet in the FIB table, one or more ports need to be selected according to a multi-path characteristic of the NDN network to forward the data request packet. If there is no routing information corresponding to the name in the FIB, the data request packet is discarded or returned.

When receiving a data response packet, the network device searches the PIT table according to a name carried in the data response packet, to obtain a port list; and then forwards the data response packet by using a port in the port list and caches content in the CS. If no corresponding PIT entry is found, or a PIT entry records that a data response packet with respect to the same content has been forwarded, the current data response packet is discarded.

When a user sends a data request packet to a content provider, a network device on a path between the user and the content provider may respond to this data request packet by returning a data response packet and discarding the original data request packet, provided that the network device has cached content that is requested by the data request packet. As a result, the data request packet cannot reach the content provider.

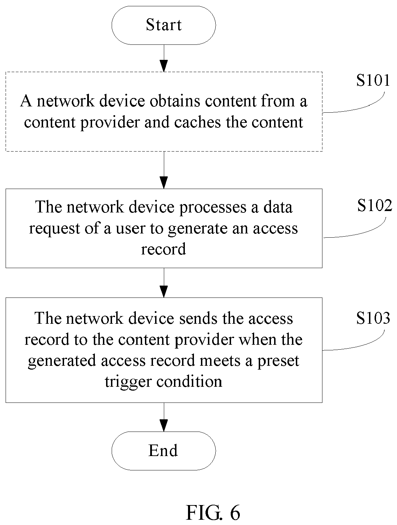

The present invention provides an access record feedback method. Referring to FIG. 6, the access record feedback method includes step S101 to step S103.

Step S101 (optional). A network device obtains content from a content provider and caches the content.

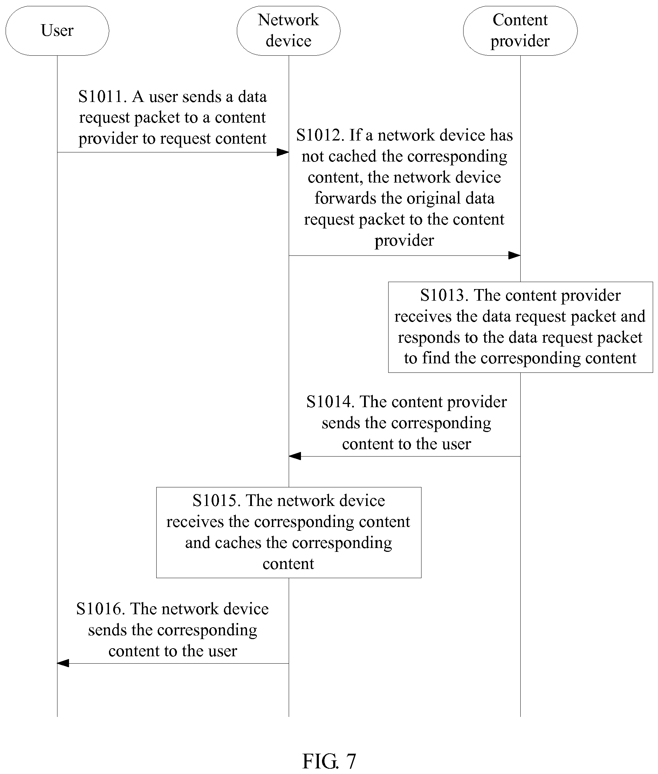

When a user sends a data request packet to the content provider, if the network device on a path between the user and the content provider has not cached content requested by the data request packet, the network device needs to obtain the content from the content provider and cache the content, and then sends the content to the user. Referring to FIG. 7, step S101 specifically includes step S1011 to step S1016.

Step S1011. A user sends a data request packet to the content provider to request content.

Step S1012. If the network device has not cached the corresponding content, the network device forwards the original data request packet to the content provider.

Step S1013. The content provider receives the data request packet and responds to the data request packet to find the corresponding content.

Step S1014. The content provider sends the corresponding content to the user.

Because of existence of the routing network device between the content provider and the user, the corresponding content sent by the content provider to the user does not directly reach the user, but is forwarded by the network device.

Step S1015. The network device receives the corresponding content and caches the corresponding content.

Step S1016. The network device sends the corresponding content to the user.

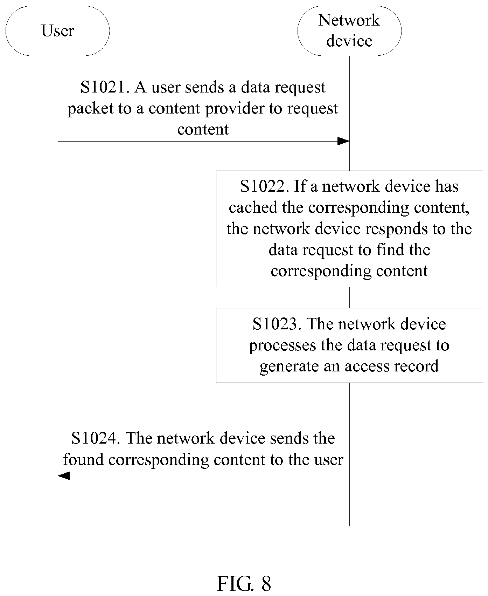

Step S102. The network device processes a data request of the user to generate an access record, where the data request is used to request the foregoing content. Referring to FIG. 8, step S102 specifically includes step S1021 to step S1024.

Step S1021. The user sends a data request packet to the content provider to request the content.

Step S1022. If the network device has cached the corresponding content, the network device responds to the data request to find the corresponding content.

Step S1023. The network device processes the data request to generate the access record.

The network device does not discard the original data request packet, but processes the original data request packet to generate the access record indicating that the user has accessed the content.

The data request may be processed in the following manners.

Manner 1. The network device stores the original data request to generate the access record.

Specifically, the original data request is stored to generate the access record. After a plurality of original access requests are collected, access records are sent to the content provider in batch.

Manner 2. Extract key information from the data request to generate the access record.

Specifically, the original data request is not stored, and the key information is extracted from the original data request. The key information includes but is not limited to requested content, requester, port information, access frequency, cache node information, and the like. After a plurality of access requests are collected, access records are sent to the content provider in batch.

Manner 3: The network device sends access records to the content provider in batch by combining manner 1 and manner 2.

In addition, the generated access records may be organized with respect to different basic units. For example, the access records may be access records with respect to one piece of content, or access records with respect to one content provider.

Step S1024. The network device sends the found corresponding content to the user.

Step S103. The network device sends the access record to the content provider when the generated access record meets a preset trigger condition.

The network device does not send an access record to the content provider every time the network device receives a data request of a user. Instead, the access record needs to meet the preset trigger condition. The preset trigger condition may include one or more of the following:
that a preset time threshold is exceeded, that a preset quantity of data requests is exceeded, that network content is deleted from the network device, or the like. A person skilled in the art can envision that another preset trigger condition may also be applied to the present invention.

According to the access record feedback method provided in the present invention, the network device processes the data request of the user to generate the access record; and the network device sends the access record to the content provider when the generated access record meets the preset trigger condition. The network device does not directly discard a data request packet any more, but processes the data request packet to generate an access record, and sends the access record to the content provider when the preset trigger condition is met. This resolves a problem that a user request cannot pass through a network device to reach a content provider in a CCN or NDN network.

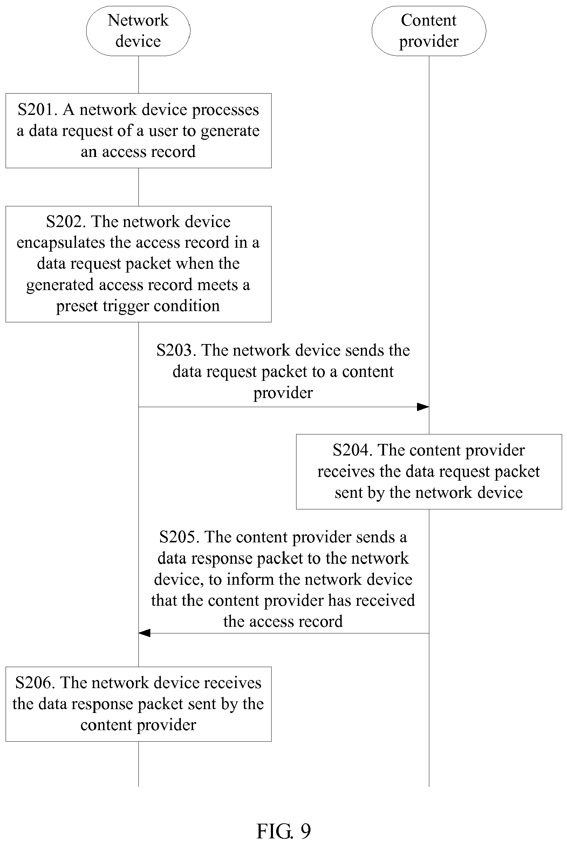

The present invention provides another access record feedback method. Referring to FIG. 9, the access record feedback method includes the following steps.

Step S201. A network device processes a data request of a user to generate an access record. Refer to the step S102 shown in FIG. 6, and details are not repeated herein.

Step S202. The network device encapsulates the access record in a data request packet when the generated access record meets a preset trigger condition.

For specifics of the preset trigger condition, refer to step S103 shown in FIG. 6. Details are not repeated herein.

In a CCN or NDN network, the network device may respond to a data request packet. Therefore, to ensure that access information can be sent to a content provider, in the present invention, a content name used in the data request packet includes a name of the content provider and an extension that uniquely identifies the access record, for example, name of the content provider/log/device number/serial number. This content name can ensure uniqueness on an entire path between the network device and the content provider.

Step S203. The network device sends the data request packet to a content provider.

Step S204. The content provider receives the data request packet sent by the network device.

The content provider may extract the access record from the data request packet for further processing.

Step S205. The content provider sends a data response packet to the network device, to inform the network device:
that the content provider has received the access record; that a "connected state" resulting from transfer of the data request packet, in a PIT table in another intermediate network device, may be cleared; and that other content may be transferred as needed.

Step S206. The network device receives the data response packet sent by the content provider.

According to the access record feedback method provided in the present invention, the network device processes the data request of the user to generate the access record; the network device encapsulates the access record in the data request packet when the generated access record meets the preset trigger condition; the network device sends the data request packet to the content provider; the content provider receives the data request packet sent by the network device, and the content provider may extract the access record from the data request packet for further processing; the content provider sends the data response packet to the network device to inform the network device that the content provider has received the access record; and the network device receives the data response packet sent by the content provider. The network device does not directly discard a data request packet any more, but processes the data request packet to generate an access record, and sends, by using the data request packet, the access record to the content provider when the preset trigger condition is met. This resolves a problem that a user request cannot pass through a network device to reach a content provider in a CCN or NDN network.

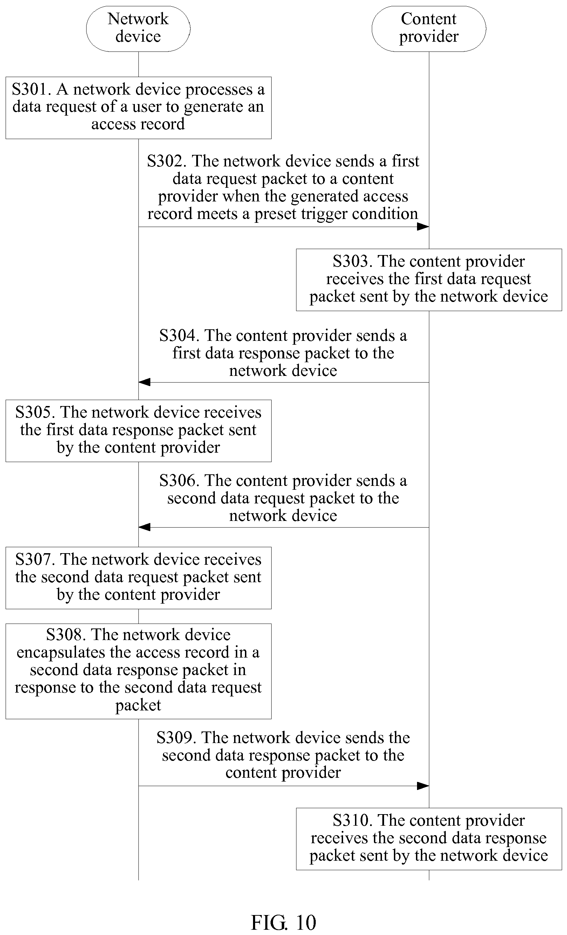

The present invention provides another access record feedback method. A network device informs a content provider of an available access record by using a data request packet, so that the content provider sends a data request packet to request the access record. Referring to FIG. 10, the access record feedback method includes the following steps.

Step S301. A network device processes a data request of a user to generate an access record. Refer to the step S102 shown in FIG. 6. Details are not repeated herein.

Step S302. The network device sends a first data request packet to a content provider when the generated access record meets a preset trigger condition, where the first data request packet is used to inform the content provider of an available access record.

For specifics of the preset trigger condition, refer to step S103 shown in FIG. 6. Details are not repeated herein. A content name in the first data request packet includes a name of the content provider and an extension that uniquely identifies the access record.

Step S303. The content provider receives the first data request packet sent by the network device.

Step S304. The content provider sends a first data response packet to the network device, where the first data response packet is used to indicate that the content provider has received the first data request packet.

Step S305. The network device receives the first data response packet sent by the content provider.

Step S306. The content provider sends a second data request packet to the network device, where the second data request packet is used to indicate that the content provider is requesting the access record.

In the second data request packet sent by the content provider, a name of requested content is a name of the access record provided by the network device.

Step S307. The network device receives the second data request packet sent by the content provider.

Step S308. The network device encapsulates the access record in a second data response packet in response to the second data request packet.

Step S309. The network device sends the second data response packet to the content provider.

Step S310. The content provider receives the second data response packet sent by the network device.

The content provider may extract the access record from the second data response packet for further processing.

According to the access record feedback method provided in the present invention, the network device processes the data request of the user to generate the access record; the network device sends the first data request packet to the content provider when the generated access record meets the preset trigger condition, where the first data request packet is used to inform the content provider of an available access record; the content provider receives the first data request packet sent by the network device; the content provider sends the first data response packet to the network device, where the first data response packet is used to indicate that the content provider has received the first data request packet; the network device receives the first data response packet sent by the content provider; the content provider sends the second data request packet to the network device, where the second data request packet is used to indicate that the content provider is requesting the access record; the network device receives the second data request packet sent by the content provider; the network device encapsulates the access record in the second data response packet in response to the second data request packet; the network device sends the second data response packet to the content provider; and the content provider receives the second data response packet sent by the network device. The network device does not directly discard a data request packet any more. Instead, the network device processes the data request packet to generate an access record; informs, by using a data request packet, the content provider of an available access record when the preset trigger condition is met, so that the content provider sends a data request packet to request the access record; and then sends the access record to the content provider by using a data response packet. This resolves a problem that a user request cannot pass through a network device to reach a content provider in a CCN or NDN network.

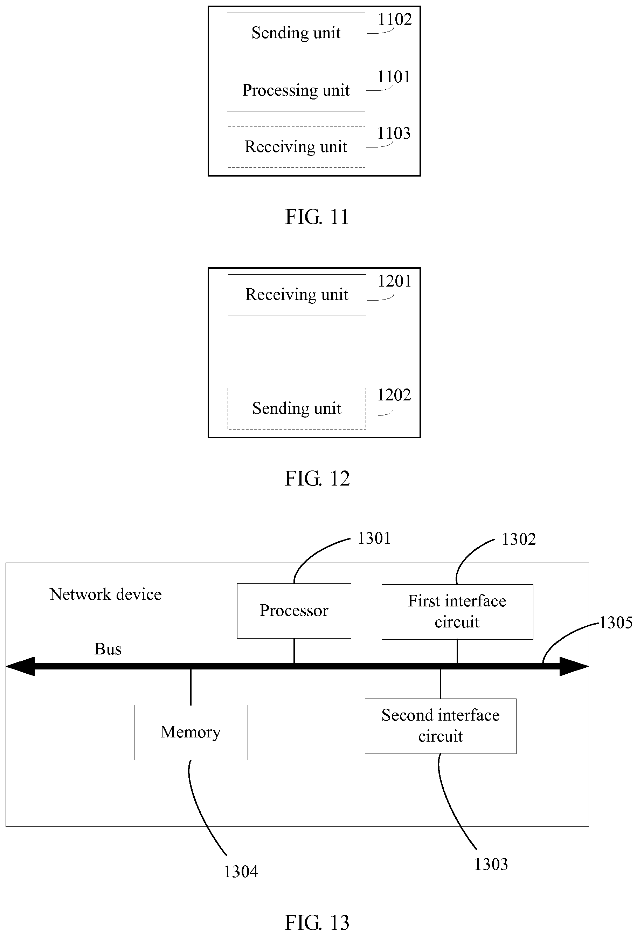

The present invention provides a network device, configured to execute the foregoing access record feedback method. Referring to FIG. 11, the network device includes:
a processing unit 1101, configured to process a data request of a user to generate an access record; and
a sending unit 1102, configured to send the access record to a content provider when the generated access record meets a preset trigger condition.

The network device in this embodiment of the present invention may be configured to execute the foregoing method procedure. Therefore, for technical effects that can be obtained by the network device, reference may be made to the method embodiment. Details are not repeated herein in this embodiment of the present invention.

An example is provided, in which the processing unit 1101 is specifically configured to:
store the original data request to generate the access record; and/or
extract key information from the data request to generate the access record.

An example is provided, in which the preset trigger condition includes one or more of the following:
that a preset time threshold is exceeded, that a preset quantity of data requests is exceeded, or that network content is deleted from the network device.

An example is provided, in which
the sending unit 1102 is further configured to encapsulate the access record in a data request packet; and
the sending unit 1102 is further configured to send the data request packet to the content provider.

Optionally, referring to FIG. 11, the network device further includes a receiving unit 1103, configured to receive a data response packet sent by the content provider. The data response packet is used to indicate that the receiving unit has received the access record.

An example is provided, in which
the sending unit 1102 is further configured to send a first data request packet to the content provider, where the first data request packet is used to inform the content provider of an available access record;
the receiving unit 1103 is further configured to receive a first data response packet sent by the content provider, where the first data response packet is used to indicate that the receiving unit has received the first data request packet;
the receiving unit 1103 is further configured to receive a second data request packet sent by the content provider, where the second data response packet is used to indicate that the network device is requesting the access record; and
the sending unit 1102 is further configured to: encapsulate, in response to the second data request packet, the access record in a second data response packet, and send the second data response packet to the content provider.

An example is provided, in which the access record includes:
an access record with respect to one piece of content; or
an access record with respect to one content provider.

The network device in this embodiment of the present invention may be configured to execute the foregoing method procedure. Therefore, for technical effects that can be obtained by the network device, reference may be made to the method embodiment. Details are not repeated herein in this embodiment of the present invention.

It should be noted that the processing unit may be an independent processor, may be integrated into a processor of the network device, or may be stored in a memory of the network device in a form of program code, to be called by a processor of the network device to perform the foregoing functions of the processing unit. The processor herein may be a central processing unit (English full name: central processing unit, CPU for short), or an application-specific integrated circuit (English full name: application-specific integrated circuit, ASIC for short), or one or more integrated circuits configured to implement this embodiment of the present invention.

The present invention provides a content provider, configured to execute the foregoing access record feedback method. Referring to FIG. 12, the content provider includes:
a receiving unit 1201, configured to receive an access record sent by a network device, where the access record is generated by the network device after the network device processes a data request of a user, and is sent when the access record meets a preset trigger condition.

The content provider in this embodiment of the present invention may be configured to execute the foregoing method procedure. Therefore, for technical effects that can be obtained by the content provider, reference may be made to the method embodiment. Details are not repeated herein in this embodiment of the present invention.

An example is provided, in which that the access record is generated by the network device after the network device processes a data request of a user includes:
storing, by the network device, the original data request to generate the access record; and/or
extracting, by the network device, key information from the data request to generate the access record.

An example is provided, in which the preset trigger condition includes one or more of the following:
that a specified time threshold is exceeded, that a specified quantity of data requests is exceeded, or that network content is deleted from the network device.

An example is provided, in which
the receiving unit 1201 is further configured to receive a data request packet sent by the network device, where the access record is encapsulated in the data request packet.

Optionally, referring to FIG. 12, the content provider further includes a sending unit 1202, configured to send a data response packet to the network device, where the data response packet is used to indicate that the receiving unit 1201 has received the access record.

An example is provided, in which
the receiving unit 1201 is further configured to receive a first data request packet sent by the network device, where the first data request packet informs the content provider of an available access record;
the sending unit 1202 is further configured to send a first data response packet to the network device, where the first data response packet is used to indicate that the receiving unit 1201 has received the first data request packet;
the sending unit 1202 is further configured to send a second data request packet to the network device, where the second data request packet is used to indicate that the content provider is requesting the access record; and
the receiving unit 1201 is further configured to receive a second data response packet sent by the network device, where the access record is encapsulated in the second data response packet.

An example is provided, in which the receiving unit 1201 is further configured to:
receive an access record sent by the network device with respect to one piece of content; or
receive an access record sent by the network device with respect to one content provider.

The content provider in this embodiment of the present invention may be configured to execute the foregoing method procedure. Therefore, for technical effects that can be obtained by the content provider, reference may be made to the method embodiment. Details are not repeated herein in this embodiment of the present invention.

The present invention provides a network device, configured to execute the foregoing access record feedback method. Referring to FIG. 13, the network device includes a processor 1301, a first interface circuit 1302, a second interface circuit 1303, a memory 1304, and a bus 1305. The processor, the first interface circuit 1302, the second interface circuit 1303, and the memory 1304 are connected and communicate with each other by using the bus 1305. The processor 1301 is configured to execute program code in the memory 1304 to control the first interface circuit 1302 and the second interface circuit 1303 to perform the following operations:
the processor 1301 is configured to process a data request of a user to generate an access record; and
the first interface circuit 1302 is configured to send the access record to a content provider when the generated access record meets a preset trigger condition.

The network device in this embodiment of the present invention may be configured to execute the foregoing method procedure. Therefore, for technical effects that can be obtained by the network device, reference may be made to the method embodiment. Details are not repeated herein in this embodiment of the present invention.

An example is provided, in which the processor 1301 is specifically configured to:
store the original data request to generate the access record; and/or
extract key information from the data request to generate the access record.

An example is provided, in which the preset trigger condition includes one or more of the following:
that a preset time threshold is exceeded, that a preset quantity of data requests is exceeded, or that network content is deleted from the network device.

An example is provided, in which
the first interface circuit 1302 is further configured to encapsulate the access record in a data request packet;
the first interface circuit 1302 is further configured to send the data request packet to the content provider; and
the second interface circuit 1303 is configured to receive a data response packet sent by the content provider, where the data response packet is used to indicate that the first interface circuit 1302 has received the access record.

An example is provided, in which
the first interface circuit 1302 is further configured to send a first data request packet to the content provider, where the first data request packet is used to inform the content provider of an available access record;
the second interface circuit 1303 is configured to receive a first data response packet sent by the content provider, where the first data response packet is used to indicate that the second interface circuit 1303 has received the first data request packet;
the second interface circuit 1303 is further configured to receive a second data request packet sent by the content provider, where the second data response packet is used to indicate that the network device is requesting the access record; and
the first interface circuit 1302 is further configured to: encapsulate, in response to the second data request packet, the access record in a second data response packet, and send the second data response packet to the content provider.

An example is provided, in which the access record includes:
an access record with respect to one piece of content; or
an access record with respect to one content provider.

It should be noted that, the processor 1301 herein may be one processor or may be a collective term of a plurality of processing elements. For example, the processor may be a central processing unit CPU, may be an application-specific integrated circuit ASIC, or may be one or more integrated circuits configured to implement this embodiment of the present invention, for example, one or more micro-processors (English full name: digital signal processor, DSP for short) or one or more field programmable gate arrays (English full name: field programmable gate array, FPGA for short).

The memory 1304 may be one storage apparatus or may be a collective term of a plurality of storage elements, and is configured to store executable program code, or a parameter, data and the like that are required for running of an access-network management device. The memory 1304 may include a random access memory (English full name: random access memory, RAM for short), or may include a non-volatile memory (English full name: non-volatile memory, NVRAM for short), such as a magnetic disk memory or a flash memory (Flash).

The bus 1305 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 1305 may include an address bus, a data bus, a control bus, or the like. For ease of illustration, the bus 1305 is represented by only one bold line in FIG. 13, but this does not mean that there is only one bus or one type of bus.

The processor 1301 is configured to execute a program in the memory, so as to implement the method provided in the method embodiment together with the first interface circuit 1302 and the second interface circuit 1303.

Specifically, the processor 1301 is configured to execute the program in the memory, to implement the functions of the processing unit of the network device in the foregoing embodiment.

The first interface circuit 1302 is configured to implement the functions of the sending unit of the network device in the foregoing embodiment.

The second interface unit 1303 is configured to implement the functions of the receiving unit of the network device in the foregoing embodiment.

The network device in this embodiment of the present invention may be configured to execute the foregoing method procedure. Therefore, for technical effects that can be obtained by the network device, reference may be made to the method embodiment. Details are not repeated herein in this embodiment of the present invention.

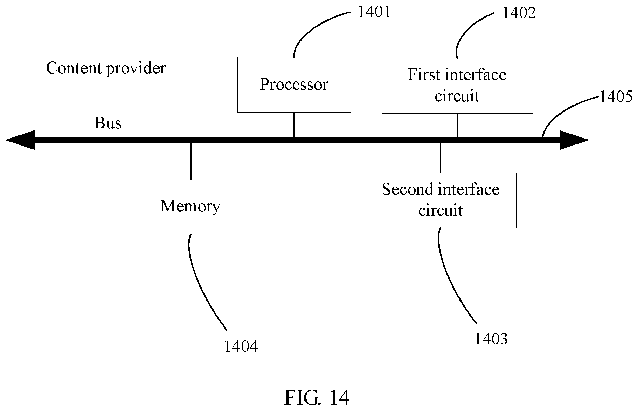

The present invention provides a content provider, configured to execute the foregoing access record feedback method. Referring to FIG. 14, the content provider includes a processor 1401, a first interface circuit 1402, a second interface circuit 1403, a memory 1404, and a bus 1405. The processor 1401, the first interface circuit 1402, the second interface circuit 1403, and the memory 1404 are connected and communicate with each other by using the bus 1405. The processor 1404 is configured to execute program code in the memory 1404 to control the first interface circuit 1402 and the second interface circuit 1403 to perform the following operations:
the first interface circuit 1402 is configured to receive an access record sent by a network device, where the access record is generated by the network device after the network device processes a data request of a user, and is sent when the access record meets a preset trigger condition.

The content provider in this embodiment of the present invention may be configured to execute the foregoing method procedure. Therefore, for technical effects that can be obtained by the content provider, reference may be made to the method embodiment. Details are not repeated herein in this embodiment of the present invention.

An example is provided, in which that the access record is generated by the network device after the network device processes a data request of a user includes:
storing, by the network device, the original data request to generate the access record; and/or
extracting, by the network device, key information from the data request to generate the access record.

An example is provided, in which the preset trigger condition includes one or more of the following:
that a specified time threshold is exceeded, that a specified quantity of data requests is exceeded, or that network content is deleted from the network device.

An example is provided, in which
the first interface circuit 1402 is further configured to receive a data request packet sent by the network device, where the access record is encapsulated in the data request packet; and
the second interface circuit 1403 is configured to send a data response packet to the network device, where the data response packet is used to indicate that the receiving unit has received the access record.

An example is provided, in which
the first interface circuit 1402 is further configured to receive a first data request packet sent by the network device, where the first data request packet informs the content provider of an available access record;
the second interface circuit 1403 is configured to send a first data response packet to the network device, where the first data response packet is used to indicate that the first interface circuit 1402 has received the first data request packet;
the second interface circuit 1403 is further configured to send a second data request packet to the network device, where the second data request packet is used to indicate that the content provider is requesting the access record; and
the first interface circuit 1402 is further configured to receive a second data response packet sent by the network device, where the access record is encapsulated in the second data response packet.

An example is provided, in which the first interface circuit 1402 is further configured to:
receive an access record sent by the network device with respect to one piece of content; or
receive an access record sent by the network device with respect to one content provider.

It should be noted that, the processor 1401 herein may be one processor or may be a collective term of a plurality of processing elements. For example, the processor may be a central processing unit CPU, may be an application-specific integrated circuit ASIC, or may be one or more integrated circuits configured to implement this embodiment of the present invention, for example, one or more micro-processors (English full name: digital signal processor, DSP for short) or one or more field programmable gate arrays (English full name: field programmable gate array, FPGA for short).

The memory 1404 may be one storage apparatus or may be a collective term of a plurality of storage elements, and is configured to store executable program code, or a parameter, data and the like that are required for running of an access-network management device. The memory 1404 may include a random access memory (English full name: random access memory, RAM for short), or may include a non-volatile memory (English full name: non-volatile memory, NVRAM for short), such as a magnetic disk memory or a flash memory (Flash).

The bus 1405 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 1405 may include an address bus, a data bus, a control bus, or the like. For ease of illustration, the bus 1405 is represented by only one bold line in FIG. 14, but this does not mean that there is only one bus or one type of bus.

The processor 1401 is configured to execute a program in the memory, so as to implement the method provided in the method embodiment together with the first interface circuit 1402 and the second interface circuit 1403.

Specifically, the first interface circuit 1402 is configured to implement the functions of the receiving unit of the content provider in the foregoing embodiment.

The second interface unit 1403 is configured to implement the functions of the sending unit of the content provider in the foregoing embodiment.

The content provider in this embodiment of the present invention may be configured to execute the foregoing method procedure. Therefore, for technical effects that can be obtained by the content provider, reference may be made to the method embodiment. Details are not repeated herein in this embodiment of the present invention.

A person of ordinary skill in the art may be aware that the units and algorithm steps in the examples described with reference to the embodiments disclosed in this specification may be implemented by electronic hardware or a combination of computer software and electronic hardware. Whether the functions are implemented by hardware or software depends on particular applications and design constraint conditions of the technical solutions. A person skilled in the art may use a different method to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, device, and method may be implemented in other manners. For example, the described device embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (English full name: read-only memory, ROM for short), a random access memory (English full name: random access memory, RAM for short), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An access record feedback method, comprising:
processing, by a network device, a data request of a user to generate an access record; and
sending, by the network device, the access record to a content provider when the generated access record meets a preset trigger condition.

2. The access record feedback method according to claim 1, wherein the processing, by a network device, a data request of a user to generate an access record comprises:
storing, by the network device, the original data request to generate the access record; and/or
extracting, by the network device, key information from the data request to generate the access record.

3. The access record feedback method according to claim 1, wherein the preset trigger condition comprises one or more of the following:
that a preset time threshold is exceeded, that a preset quantity of data requests is exceeded, or that the network content is deleted from the network device.

4. The access record feedback method according to claim 1, wherein the sending, by the network device, the access record to a content provider comprises:
encapsulating, by the network device, the access record in a data request packet;
sending the data request packet to the content provider; and
receiving a data response packet sent by the content provider, wherein the data response packet is used to indicate that the content provider has received the access record.

5. The access record feedback method according to claim 1, wherein the sending, by the network device, the access record to a content provider comprises:
sending, by the network device, a first data request packet to the content provider, wherein the first data request packet is used to inform the content provider of an available access record;
receiving a first data response packet sent by the content provider, wherein the first data response packet is used to indicate that the content provider has received the first data request packet;
receiving a second data request packet sent by the content provider, wherein the second data response packet is used to indicate that the content provider is requesting the access record; and
encapsulating, in response to the second data request packet, the access record in a second data response packet, and sending the second data response packet to the content provider.

6. The access record feedback method according to claim 1, wherein the access record comprises:
an access record with respect to one piece of content; or
an access record with respect to one content provider.

7. An access record feedback method, comprising:
receiving an access record sent by a network device, wherein the access record is generated by the network device after the network device processes a data request of a user, and is sent when the access record meets a preset trigger condition.

8. The access record feedback method according to claim 7, wherein that the access record is generated by the network device after the network device processes a data request of a user comprises:
storing, by the network device, the original data request to generate the access record; and/or
extracting, by the network device, key information from the data request to generate the access record.

9. The access record feedback method according to claim 7, wherein the preset trigger condition comprises one or more of the following:
that a specified time threshold is exceeded, that a specified quantity of data requests is exceeded, or that the network content is deleted from the network device.

10. The access record feedback method according to claim 7, wherein the receiving, by a content provider, an access record sent by a network device comprises:
receiving, by the content provider, a data request packet sent by the network device, wherein the access record is encapsulated in the data request packet; and
sending a data response packet to the network device, wherein the data response packet is used to indicate that the content provider has received the access record.

11. The access record feedback method according to claim 7, wherein the receiving, by a content provider, an access record sent by a network device comprises:
receiving, by the content provider, a first data request packet sent by the network device, wherein the first data request packet informs the content provider of an available access record;
sending a first data response packet to the network device, wherein the first data response packet is used to indicate that the content provider has received the first data request packet;
sending a second data request packet to the network device, wherein the second data request packet is used to indicate that the content provider is requesting the access record; and
receiving a second data response packet sent by the network device, wherein the access record is encapsulated in the second data response packet.

12. The access record feedback method according to claim 7, wherein the receiving, by a content provider, an access record sent by a network device comprises:
receiving, by the content provider, an access record sent by the network device with respect to one piece of content; or
receiving, by the content provider, an access record sent by the network device with respect to one content provider.

13. A network device, comprising:
a processing unit, configured to process a data request of a user to generate an access record; and
a sending unit, configured to send the access record to a content provider when the generated access record meets a preset trigger condition.

14. The network device according to claim 13, wherein the processing unit is specifically configured to:
store the original data request to generate the access record; and/or
extract key information from the data request to generate the access record.

15. The network device according to claim 13, wherein the preset trigger condition comprises one or more of the following:
that a preset time threshold is exceeded, that a preset quantity of data requests is exceeded, or that the network content is deleted from the network device.

16. The network device according to claim 13, wherein
the sending unit is further configured to encapsulate the access record in a data request packet;
the sending unit is further configured to send the data request packet to the content provider; and
the network device further comprises a receiving unit, configured to receive a data response packet sent by the content provider, wherein the data response packet is used to indicate that the receiving unit has received the access record.

17. The network device according to claim 13, wherein
the sending unit is further configured to send a first data request packet to the content provider, wherein the first data request packet is used to inform the content provider of an available access record;
the network device further comprises a receiving unit, configured to receive a first data response packet sent by the content provider, wherein the first data response packet is used to indicate that the receiving unit has received the first data request packet;
the receiving unit is further configured to receive a second data request packet sent by the content provider, wherein the second data response packet is used to indicate that the network device is requesting the access record; and the sending unit is further configured to: encapsulate, in response to the second data request packet, the access record in a second data response packet, and send the second data response packet to the content provider.

18. The network device according to claim 13, wherein the access record comprises:
an access record with respect to one piece of content; or
an access record with respect to one content provider.

19. A content provider, comprising:
a receiving unit, configured to receive an access record sent by a network device, wherein the access record is generated by the network device after the network device processes a data request of a user, and is sent when the access record meets a preset trigger condition.

20. The content provider according to claim 19, wherein that the access record is generated by the network device after the network device processes a data request of a user comprises:
storing, by the network device, the original data request to generate the access record; and/or
extracting, by the network device, key information from the data request to generate the access record.

21. The content provider according to claim 19, wherein the preset trigger condition comprises one or more of the following:
that a specified time threshold is exceeded, that a specified quantity of data requests is exceeded, or that the network content is deleted from the network device.

22. The content provider according to claim 19, wherein
the receiving unit is further configured to receive a data request packet sent by the network device, wherein the access record is encapsulated in the data request packet; and
the content provider further comprises a sending unit, configured to send a data response packet to the network device, wherein the data response packet is used to indicate that the receiving unit has received the access record.

23. The content provider according to claim 19, wherein
the receiving unit is further configured to receive a first data request packet sent by the network device, wherein the first data request packet informs the content provider of an available access record;
the content provider further comprises a sending unit, configured to send a first data response packet to the network device, wherein the first data response packet is used to indicate that the receiving unit has received the first data request packet;
the sending unit is further configured to send a second data request packet to the network device, wherein the second data request packet is used to indicate that the content provider is requesting the access record; and
the receiving unit is further configured to receive a second data response packet sent by the network device, wherein the access record is encapsulated in the second data response packet.

24. The content provider according to claim 19, wherein the receiving unit is further configured to:
receive an access record sent by the network device with respect to one piece of content; or
receive an access record sent by the network device with respect to one content provider.

25. A network device, comprising a processor, a first interface circuit, a second interface circuit, a memory, and a bus, wherein the processor, the first interface circuit, the second interface circuit, and the memory are connected and communicate with each other by using the bus; and the processor is configured to execute program code in the memory to control the first interface circuit and the second interface circuit to perform the following operations:
the processor is configured to process a data request of a user to generate an access record; and
the first interface circuit is configured to send the access record to a content provider when the generated access record meets a preset trigger condition.

26. The network device according to claim 25, wherein the processor is specifically configured to:
store the original data request to generate the access record; and/or
extract key information from the data request to generate the access record.

27. The network device according to claim 25, wherein the preset trigger condition comprises one or more of the following:
that a preset time threshold is exceeded, that a preset quantity of data requests is exceeded, or that the network content is deleted from the network device.

28. The network device according to claim 25, wherein
the first interface circuit is further configured to encapsulate the access record in a data request packet;
the first interface circuit is further configured to send the data request packet to the content provider; and
the second interface circuit is configured to receive a data response packet sent by the content provider, wherein the data response packet is used to indicate that the first interface circuit has received the access record.

29. The network device according to claim 25, wherein
the first interface circuit is further configured to send a first data request packet to the content provider, wherein the first data request packet is used to inform the content provider of an available access record;
the second interface circuit is configured to receive a first data response packet sent by the content provider, wherein the first data response packet is used to indicate that the second interface circuit has received the first data request packet;
the second interface circuit is further configured to receive a second data request packet sent by the content provider, wherein the second data response packet is used to indicate that the network device is requesting the access record; and
the first interface circuit is further configured to: encapsulate, in response to the second data request packet, the access record in a second data response packet, and send the second data response packet to the content provider.

30. The network device according to claim 25, wherein the access record comprises:
an access record with respect to one piece of content; or
an access record with respect to one content provider.

31. A content provider, comprising a processor, a first interface circuit, a second interface circuit, a memory, and a bus, wherein the processor, the first interface circuit, the second interface circuit, and the memory are connected and communicate with each other by using the bus; and the processor is configured to execute program code in the memory to control the first interface circuit and the second interface circuit to perform the following operations:
the first interface circuit is configured to receive an access record sent by a network device, wherein the access record is generated by the network device after the network device processes a data request of a user, and is sent when the access record meets a preset trigger condition.

32. The content provider according to claim 31, wherein that the access record is generated by the network device after the network device processes a data request of a user comprises:
storing, by the network device, the original data request to generate the access record; and/or
extracting, by the network device, key information from the data request to generate the access record.

33. The content provider according to claim 31, wherein the preset trigger condition comprises one or more of the following:
that a specified time threshold is exceeded, that a specified quantity of data requests is exceeded, or that the network content is deleted from the network device.

34. The content provider according to claim 31, wherein
the first interface circuit is further configured to receive a data request packet sent by the network device, wherein the access record is encapsulated in the data request packet; and
the second interface circuit is configured to send a data response packet to the network device, wherein the data response packet is used to indicate that the receiving unit has received the access record.

35. The content provider according to claim 31, wherein
the first interface circuit is further configured to receive a first data request packet sent by the network device, wherein the first data request packet informs the content provider of an available access record;
the second interface circuit is configured to send a first data response packet to the network device, wherein the first data response packet is used to indicate that the first interface circuit has received the first data request packet;
the second interface circuit is further configured to send a second data request packet to the network device, wherein the second data request packet is used to indicate that the content provider is requesting the access record; and
the first interface circuit is further configured to receive a second data response packet sent by the network device, wherein the access record is encapsulated in the second data response packet.

36. The content provider according to claim 31, wherein the first interface circuit is further configured to:
receive an access record sent by the network device with respect to one piece of content; or
receive an access record sent by the network device with respect to one content provider.

37. An access record feedback system, comprising the network device according to any one of claims 13 to 18 and the content provider according to any one of claims 19 to 24, or
comprising the network device according to any one of claims 25 to 30 and the content provider according to any one of claims 31 to 36.
